# EUROPEAN PATENT SPECIFICATION

(11) **EP 4 249 786 B1**
(45) Date of publication and mention of the grant of the patent: **15.01.2025**
(21) Application number: 23159314.6
(22) Date of filing: 01.03.2023
(51) Int. Cl.: F16L 37/091, F16L 37/088, F16L 21/03

(54) **SEALING BUSHING FOR A CONNECTOR FOR DISTRIBUTING A FLUID**
DICHTUNGSBUCHSE FÜR EINEN STECKVERBINDER ZUR VERTEILUNG EINES FLUIDS
DOUILLE D'ÉTANCHÉITÉ POUR UN CONNECTEUR POUR LA DISTRIBUTION D'UN FLUIDE

(30) Priority: 25.03.2022 IT 202200005942
(43) Date of publication of application: 27.09.2023
(73) Proprietor: Ar-Tex S.p.A., 24060 Viadanica (BG) (IT)
(72) Inventor: BASSI, Marco, I-24060 Viadanica, BERGAMO (IT); ARCARI, Giovanni, I-24060 Viadanica, BERGAMO (IT)
(74) Representative: Chimini, Francesco

(56) References cited:
- DE-U1- 202020 105 671
- US-A- 4 440 424
- US-A1- 2008 217 912
- US-B2- 11 149 888

## Description

The present invention is in the field of fluid distribution, such as the automotive field. In particular, the present invention relates to a sealing bushing for a connector in which a fluid to be transported flows.

In the prior art, a connector is formed by a piston, i.e., a male/inner component, and by a cylinder, i.e., a female/outer component. A rubber sealing ring (O-ring) is interposed between the two elements, which ring may be mounted, depending upon requirements, on the piston or else on the cylinder. The assembly thereof requires the O-ring to be housed in a designated location and compressed by inserting the piston into the cylinder.

With known connectors, both the O-ring and the location where the O-ring is arranged have an axisymmetric shape. Consequently, during assembly, the compression of the O-ring takes place simultaneously throughout the extension thereof.

There is an increasing demand to optimize the components in order to minimize the force required for the assembly of the connector.

US 2008/217912 A1 discloses a connector for distributing a fluid, the connector comprising a female component, a hollow male component and an annular sealing ring, which, when held in the female component, has an annular extension profile having at least one axial component parallel to the longitudinal axis of the connector, in order to reduce the insertion forces needed to insert a male component into the female component, whereby the axial component of the annular extension profile is maintained by the cooperating form of the sealing seat.

US 4 440 424 A discloses a coupling device for connecting a tube in the opening of a fitting by using a retaining ring having gripping fingers. This coupling device also includes an unlocking collar for releasing the tube from engagement by the gripping fingers, the unlocking collar having a raised bead portion on its internal surface, which engages the outside of the tube and serves to seal against leakage between the unlocking collar and the outside surface of the tube. A fluid-tight packing ring is provided between the wall of the opening and the outside surface of the unlocking collar, thus providing a double seal arrangement to ensure a fluid-tight connection of the tube within the opening of the fitting.

The object of the present invention is to provide a sealing bushing for a connector which, compared to known connectors, makes it possible to reduce the force required for assembly whilst ensuring an optimal seal between the components.

This object is achieved by means of a sealing bushing according to claim 1 and a connector according to claim 11. Those claims that are dependent upon these relate to advantageous embodiments of the bushing and of the connector according to the invention.

The features and advantages of the sealing bushing and of the connector according to this invention will become apparent from the following description, given by way of non-limiting example according to the accompanying figures, wherein:

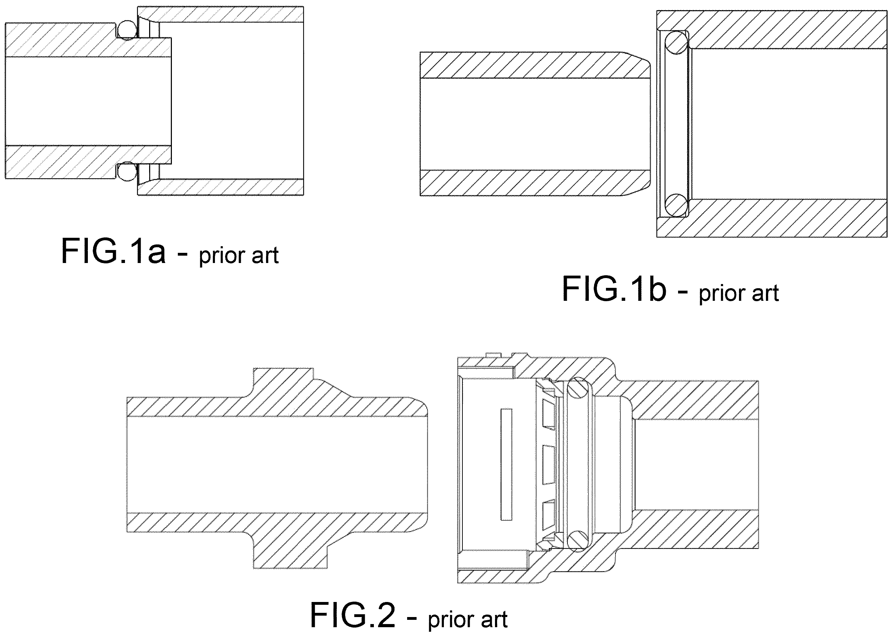

- Figures 1a and 1b are two schematic axial cross-sections of a connector of the prior art, in two embodiment variants;
- Figure 2 is an axial cross-section of a connector of the prior art, in one embodiment;

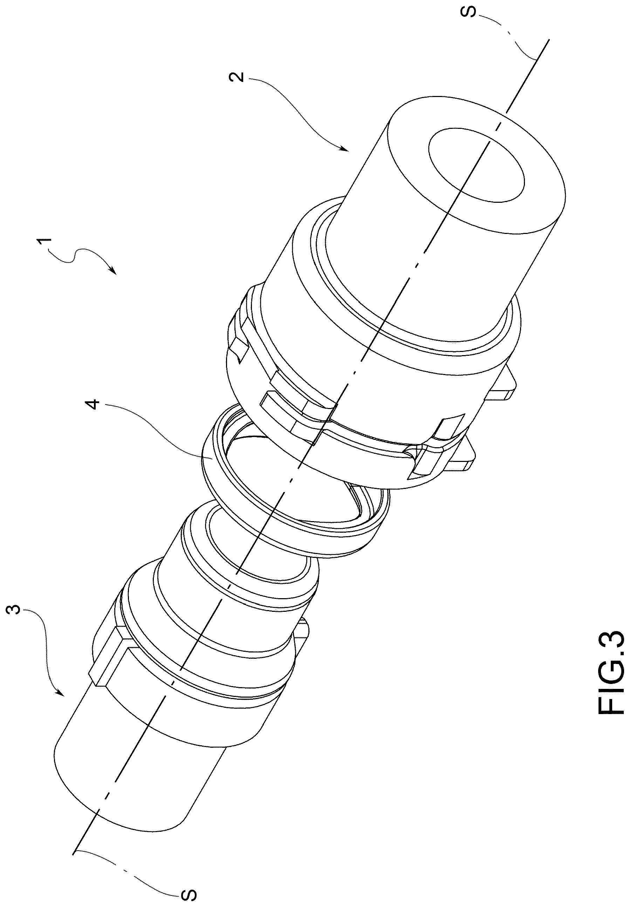

- Figure 3 is a perspective view of separate parts of a connector that is in accordance with the present invention;
- Figures 4, 5 and 6 are axial cross-sections of a connector according to the invention in a pre-assembly configuration, in three different embodiments;
- Figures 7a, 7b and 7c are side views, in partial cross-section, of a connector according to the invention in three successive steps of assembling a male component into a female component;
- Figure 8 is a perspective view of a sealing bushing of the connector, in a first embodiment of the invention;
- Figures 8a and 8b are two side views of the sealing bushing shown in Figure 8;
- Figure 9 is a front view of the sealing bushing shown in Figure 8;
- Figure 10 is a sectional view of the sealing bushing shown in Figure 9, along the sectional plane A-A;
- Figure 11 is a perspective view of the sealing bushing in a second embodiment of the invention;
- Figure 11a is an axial cross-section of the sealing bushing shown in Figure 11;
- Figure 12 is a perspective view of the sealing bushing in a second embodiment;
- Figure 12a is an axial cross-section of the sealing bushing shown in Figure 12;
- Fig. 13 is a perspective view of the sealing bushing in a third embodiment of the invention;
- Figure 13a is an axial cross-section of the sealing bushing shown in Figure 13.

With reference to the aforementioned figures, a sealing bushing that is the object of the present invention is indicated overall with the numeral 4.

The sealing bushing 4 is suitable for use in a connector 1 for the distribution of a fluid. The invention therefore also relates to a connector 1 that comprises the sealing bushing 4.

The sealing bushing 4 extends about a bushing axis X-X.

In one embodiment, the connector 1 extends predominantly along a connector axis S-S.

In one embodiment variant, the connector 1 has an "L" shape, that is, it has two portions substantially transverse to one another.

The connector 1 comprises a female component 2, or cylinder, and a hollow male component 3, or piston, which, in an engagement configuration, engages the female component 2 to allow the fluid to pass.

According to one embodiment, each component 2, 3 is made by molding.

According to one embodiment, the female component 2 extends along a female axis Y-Y and the male component 3 extends along a male axis Z-Z.

For example, the connector axis S-S, the female axis Y-Y and the male axis Z-Z are coincident with respect to one another.

In one embodiment, in the engagement configuration, that is, with the sealing bushing 4 housed in the connector 1, the bushing axis X-X also coincides with said axes S-S, Y-Y and Z-Z.

In one embodiment, the female component 2 and the male component 3 are axisymmetric with respect to the relative Y-Y, Z-Z axes thereof.

The female component 2 terminates with a female distal end 21; the male component 3 terminates with a male distal end 31.

A bushing seat 24 suitable for receiving the sealing bushing 4 is obtained in an end portion of the female component 2.

For example, the bushing seat 24 is axisymmetric in relation to the bushing axis X-X.

The sealing bushing 4, when inserted into the bushing seat 24, allows the sealing engagement between the male and female components 2, 3.

In one embodiment, the bushing seat 24 is delimited, at the opposite end thereof with respect to the female distal end 21, by an annular shoulder 50 which axially constrains the sealing bushing 4 in the insertion direction of the male component 3 into the female component 2.

In one embodiment, the connector 1 further comprises a matching ring 55 suitable for being fixed, for example by welding, to the end of the bushing seat 24 opposite the annular shoulder 50, in such a way as to prevent, during assembly operations or during use, the sealing bushing 4 from undergoing undesired axial displacements.

As mentioned above, the male component 3 is crossed axially by a male component duct 30; a female component duct 20 is obtained within the female component 2. In particular, in the engagement configuration, the male component duct 30 is suitable for merging into the female component duct 20, so as to form a single fluidic duct 10 for the distribution of the fluid. In the usage configuration, the fluidic duct is delimited by an inner duct surface 12 and an outer duct surface 14.

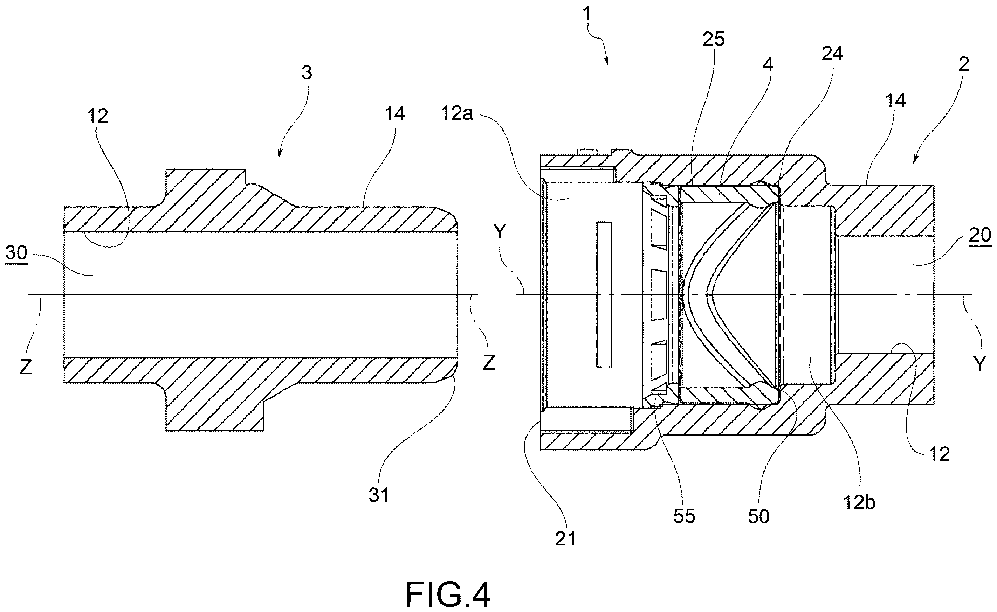

In one embodiment, the annular shoulder 50 is made in the inner duct surface 12 of the female component 2. Therefore, with reference to Figure 4, in the female component 2 the fluidic duct 12 comprises an end portion 12a, upstream of the annular shoulder 50, and a proximal portion 12b, downstream of the inner shoulder 50.

In one embodiment, the bushing seat 24 is delimited radially by a cylindrical inner surface 25.

According to one embodiment, the annular shoulder 50 is obtained at a certain axial distance from the female distal end 21 of the female component 2. In one embodiment, said axial distance is at least equal to the axial dimension of the sealing bushing 4. In one embodiment, said axial distance is greater than the axial dimension of the sealing bushing 4, such that the latter is housed in a rearward position in relation to the female distal end 21.

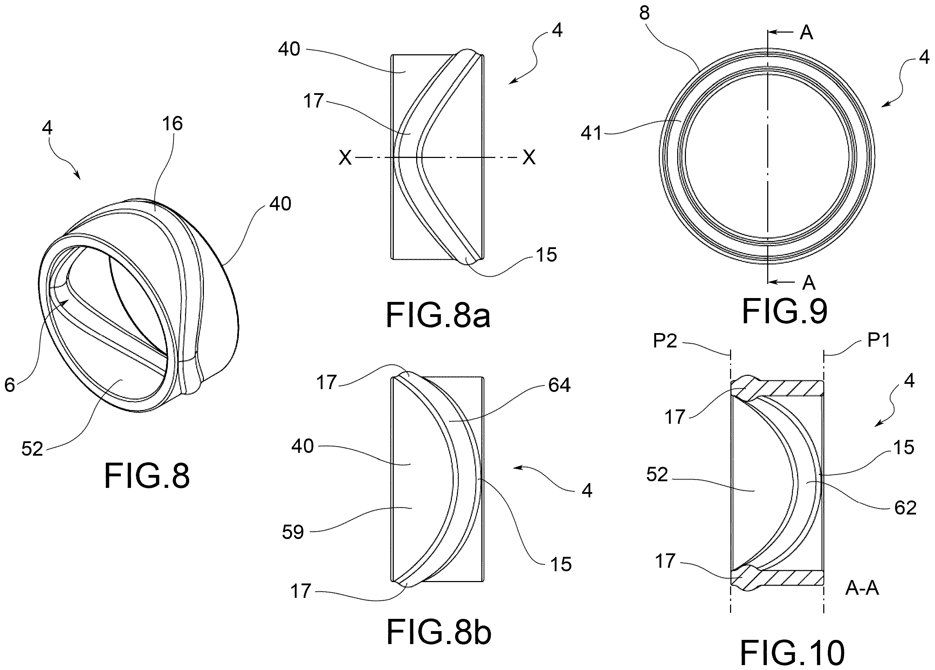

With reference to Figures 8-13, the sealing bushing 4 will now be described in detail, in some possible embodiments thereof.

The sealing bushing 4 consists of a cylindrical body 40 which extends about the bushing axis X-X. The cylindrical body 40 defines an inner side surface 52 and an outer side surface 54.

At least on the inner side surface 52 or on the outer side surface 54 of the cylindrical body 40, at least one annular rib 6 is obtained that is suitable for creating a fluid seal with the outer surface 14 of the male component 3 or with the inner surface 25 of the bushing seat 24.

In accordance with one embodiment, in an assembly configuration of the connector 1, the sealing bushing 4 is inserted by shape and/or force coupling into the bushing seat 24. In some embodiments, the sealing bushing 4 is elastically deformed upon insertion into the bushing seat 24.

According to the invention, the annular extension profile of the at least one annular rib 6 has at least one axial component parallel to the bushing axis X-X. In this way, the compression of the annular rib 6 during the insertion of the male component 3 into the sealing bushing 4 housed in the female component 2 takes place gradually.

In other words, by breaking down the extension profile of the annular rib 6 along the bushing axis X-X and along an axis perpendicular to the bushing axis X-X, at least one section of the annular rib 6 has at least one component parallel to the bushing axis X-X.

In yet other words, at least one section of the annular rib 6 is inclined in relation to an axis perpendicular to the bushing axis X-X.

The annular rib 6 does not therefore lie in a single transverse plane in relation to the bushing axis X-X, as occurs in the case of O-rings of the prior art, but intersects multiple transverse planes.

In some embodiments, at least one section of the annular rib 6 is inclined both with respect to an axis perpendicular to the bushing axis X-X and to the bushing axis X-X itself.

The technical effect given by such a configuration of the annular rib 6 is that of a progressive compression thereof during engagement with the male component 3. Therefore, the compression is not uniform and simultaneous throughout the extension of the annular rib 6.

In more detail, in a first step of engagement between the male component 3 and the sealing bushing 4, the male component 3 engages the annular rib 6 only in at least one point, preferably only in two diametrically opposite points.

In one embodiment, the annular extension profile of the annular rib 6 is shaped such that the compression of the annular rib 6 during the insertion of the male component 3 into the sealing bushing 4 grows linearly as a function of the penetration of the male component 3 into the sealing bushing 4.

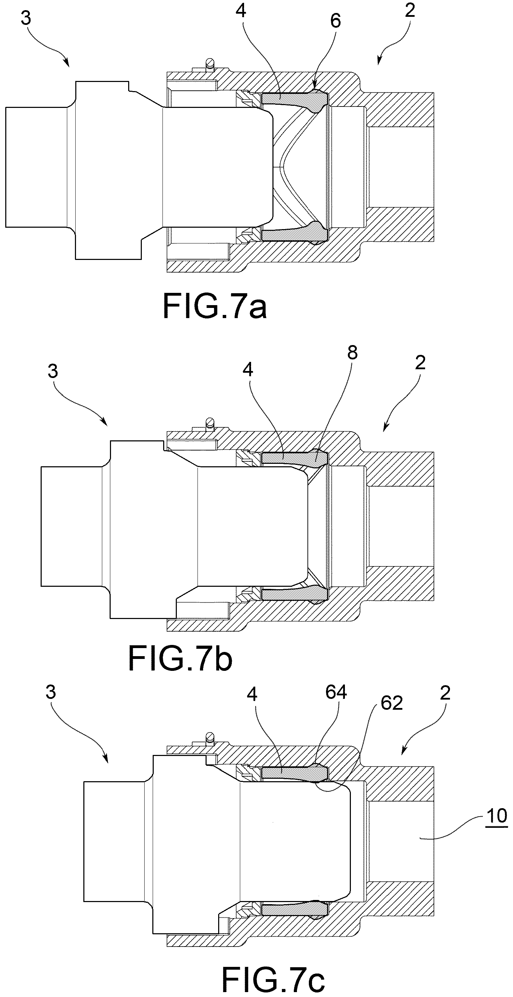

In other words, starting from an initial engagement configuration with the sealing bushing 4, shown for example in Figure 7a, the male component 2 progressively engages the annular rib 6 such that it is progressively compressed between the female component 2 and the male component 3.

Figure 7b shows the connector 1 being assembled with the male component 3 in an intermediate position of partial engagement of the sealing bushing 4.

Figure 7c shows the connector 1 assembled, with the male component 3 having reached the end-of-stroke position within the female component 2.

In one embodiment, the annular extension profile of the at least one annular rib 6 forms two semi-annular arcs 16. Each semi-annular arc 16 extends between two arc ends 17 diametrically opposed to each other and substantially tangent to one end of the bushing body 40. Each semi-annular arc 16 forms an arc curve 15 substantially tangent to the other end of the bushing body 40.

In one embodiment, the two semi-annular arches 16 are connected to each other at the arc ends 17.

With particular reference to the axial cross-section of Figure 10, the arc curve 15 is tangent to an imaginary first plane P1 which is orthogonal to the bushing axis X-X and in which a first end of the cylindrical body 40 lies.

The two arc ends 17 are tangent to a second imaginary plane P2 which is orthogonal to the bushing axis X-X and in which a second end of the cylindrical body 40 lies, opposite to the first.

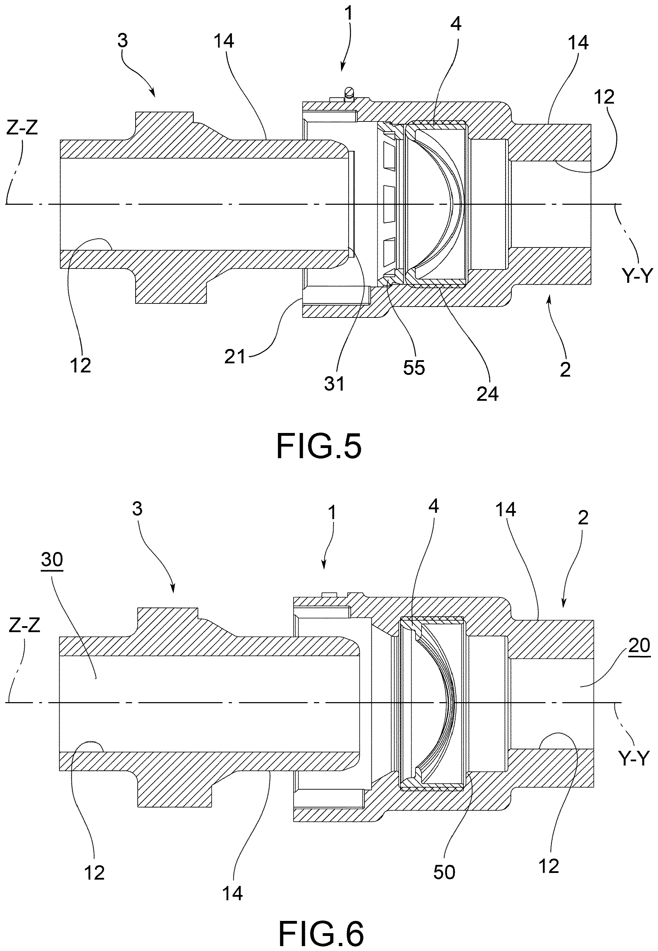

According to a first embodiment (shown in Figures 5 and 6), an inner annular rib 62, suitable for implementing a fluid seal with the outer surface 14 of the male component 3, is obtained only on the inner side surface 52.

According to a second embodiment (shown in Figure 4), an inner annular rib 62 is obtained on the inner side surface 52, which rib is suitable for creating a fluid seal with the outer surface 14 of the male component 3, and an outer annular rib 64 is obtained on the outer side surface 54, which rib is suitable for creating a fluid seal with the inner cylindrical surface 25 of the bushing seat 24. In other words, an annular rib 62, 64 is obtained on both surfaces 52, 54.

According to a third embodiment (not shown), an outer annular rib 64, suitable for implementing a fluid seal with the inner cylindrical surface 25 of the bushing seat 24, is obtained only on the outer side surface 54.

According to one embodiment, the outer annular rib 64 follows the same annular extension profile as the inner annular rib 62.

According to one embodiment, the outer annular rib 64 is located at the inner annular rib 62, such that the outer annular rib 64 and inner annular rib 62 together form an annular sealing element 8 protruding, both internally and externally, from the side wall 41 of the cylindrical body 40.

According to an embodiment shown in Figures 8-10, the sealing bushing 4 is provided with an inner annular rib 62 having a substantially circular cross-section. In this embodiment as shown, the sealing bushing 4 is provided with an outer annular rib 64 also having a substantially circular cross-section.

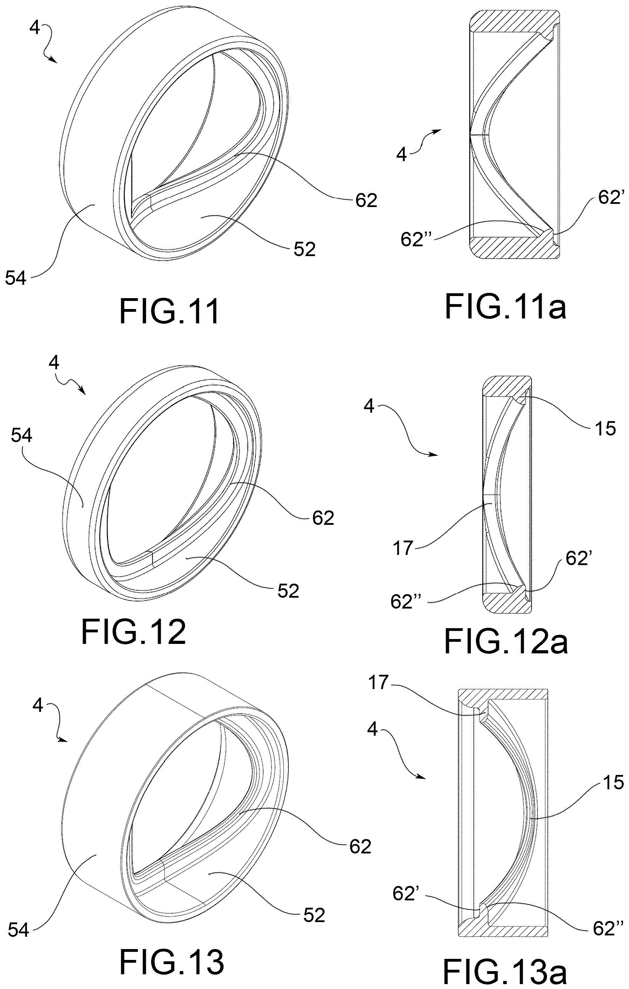

Figures 11-13 show the sealing bushing 4 in many embodiment variants, wherein the inner annular rib 62 has a substantially lip-shaped cross-section.

In the embodiment of Figures 11 and 11a, the lip-shaped cross-section of the inner annular rib 62 has a substantially flat annular wall 62', perpendicular to the bushing axis X-X, and an opposite curved wall 62", that is, convex.

In the embodiment of Figures 12 and 12a, the annular rib 62 has substantially the same cross-section as the annular rib 62 of Figures 11 and 11a, but the sealing bushing 4 has a lower axial extension and a greater cylindrical body wall thickness. Consequently, the extension profile of the annular rib 62 has a less accentuated radius of curvature.

In the embodiment of Figures 13 and 13a, the annular rib 62 has a more radially elongated but thinner lip-shaped cross-section. Furthermore, the annular rib 62 is connected to one end of the sealing bushing 4 by means of a curved annular wall 62", that is, convex, of greater thickness than the thickness of the remaining part of the side wall 41 of the cylindrical body 40.

According to a preferred embodiment, the sealing bushing 4 is made of a polymer material, for example rubber. Preferably, it is made in one piece, for example by molding.

Innovatively, the sealing bushing that is the object of the present invention, insofar as it allows for the distribution of the force exerted during assembly by reducing the assembly force required compared to known connectors, fully fulfills the determined purpose in overcoming the drawbacks mentioned with reference to the prior art. Similarly, the connector that is the object of the present invention, as it comprises the sealing bushing, also fully fulfills the intended purpose.

Advantageously, the annular rib makes it possible to distribute the compression of the sealing bushing over a wider stroke, with a consequent reduction in the peak of the force required in order to assemble the connector.

Advantageously, the extension profile of the annular rib allows for controlled deformation of the sealing bushing, so as to render the compression thereof less instantaneous, more progressive and less wasteful in terms of force.

Advantageously, the sealing bushing makes it possible to reduce the amount of time necessary for the assembly of the connector.

Advantageously, the sealing bushing ensures less fatigue for the workforce involved in assembling the connectors.

Advantageously, the sealing bushing ensures high efficiency in terms of sealing.

Advantageously, in some embodiments the sealing bushing is insertable into the bushing seat without the need for precise orientation.

Advantageously, the connector components are easily molded, without presenting particular constructional complexities.

To the embodiments of the aforementioned sealing bushing and of the connector, a person skilled in the art, in order to meet specific requirements, may make changes or replace elements with other functionally equivalent ones, within the scope of protection as defined by the following claims. Moreover, each variant described as belonging to a possible embodiment may be implemented independently of the other variants described, within the scope of the invention, as defined by the appended claims.

## Claims

1. A sealing bushing (4) for a connector (1) for distributing a fluid, wherein the connector (1) comprises:
- a female component (2) in which a bushing seat (24) is obtained;
- a hollow male component (3) which, in an engagement configuration, engages the female component (2) to allow the fluid to pass;
wherein the sealing bushing (4) is suitable for being inserted into the bushing seat (24) and for providing the
sealing engagement between said female component (2) and said male component (3);
wherein the sealing bushing (4) is **characterized in that** it consists of a cylindrical body (40) which extends about a bushing axis (X-X), wherein at least one annular rib (6) is obtained at least on an inner side surface (52) or outer side surface (54) of said cylindrical body (40), the at least one annular rib (6) being suitable for creating a fluid seal with an outer surface (14) of the male component (3) or an inner surface (25) of the bushing seat (24), wherein the annular extension profile of the at least one annular rib (6) has at least one axial component parallel to the bushing axis (X-X) such that the compression of the at least one annular rib (6) when inserting the male component (3) into the sealing bushing (4) housed in the female component (2) occurs gradually.

2. Sealing bushing (4) according to claim 1, wherein the annular extension profile of the at least one annular rib (6) is shaped such that the compression of the at least one annular rib (6) when inserting the male component (3) into the sealing bushing (4) housed in the female component (2) grows linearly as a function of the penetration of the male component (3) into the sealing bushing (4).

3. Sealing bushing (4) according to claim 1 or 2, wherein the annular extension profile of the at least one annular rib (6) forms two semi-annular arcs (16), wherein each semi-annular arc (16) extends between two arc ends (17) diametrically opposed to each other and substantially tangent to one end of the bushing body (40) forming an arc curve (15) substantially tangent to the other end of the bushing body (40).

4. Sealing bushing (4) according to any one of the preceding claims, wherein an inner annular rib (62) suitable for creating a fluid seal with an outer surface (14) of the male component (3) is obtained only on the inner side surface (52).

5. Sealing bushing (4) according to any one of claims 1 to 3, wherein an inner annular rib (62) suitable for creating a fluid seal with an outer surface (14) of the male component (3) is obtained on the inner side surface (52) and an outer annular rib (64) suitable for creating a fluid seal with the inner surface (25) of the bushing seat (24) is obtained on the outer side surface (54).

6. Sealing bushing (4) according to claim 5, wherein the outer annular rib (64) follows the same annular extension profile as the inner annular rib (62).

7. Sealing bushing (4) according to claim 5 or 6, wherein the outer annular rib (64) matches the inner annular rib (62), such that the outer annular rib (64) and the inner annular rib (62) form together an annular sealing element (8) protruding, both internally and externally, from a side wall (41) of the cylindrical body (40).

8. Sealing bushing (4) according to any one of the preceding claims, wherein the at least one annular rib (6) has a substantially circular section.

9. Sealing bushing (4) according to any one of claims 1 to 7, wherein the at least one annular rib (6) has a lip-shaped section.

10. Sealing bushing (4) according to any one of the preceding claims, made of polymer material, such as rubber, and in one piece by molding.

11. A connector (1) for distributing a fluid, comprising a female component (2), a hollow male component (3) which, in an engagement configuration, engages the female component (2) to allow the fluid to pass, and a sealing bushing (4) according to any one of the preceding claims suitable for being sealingly housed in a bushing seat (24) obtained in an end portion of the female component (2).

12. Connector (1) according to claim 11, wherein, in a pre-assembly configuration, the sealing bushing (4) is inserted by shape and/or force coupling into the bushing seat (24).

13. Connector (1) according to claim 11 or 12, wherein the bushing seat (24) is axisymmetric with respect to the bushing axis (X-X).

14. Connector (1) according to any one of claims 11 to 13, wherein the bushing seat (24) is delimited at one end by an inner shoulder (50) which axially constrains the sealing bushing (4) in the insertion direction of the male component (3) into the female component (2).

## Patentansprüche

1. Dichtungsbuchse (4) für einen Verbinder (1) zum Verteilen eines Fluids, wobei der Verbinder (1) umfasst:
- eine weibliche bzw. aufnehmende Komponente (2), in der ein Buchsensitz (24) erhalten bzw. ausgebildet ist;
- eine hohle männliche bzw. aufzunehmende Komponente (3), die in einer Eingriffskonfiguration in die aufnehmende Komponente (2) eingreift, um einen Durchgang des Fluids zu ermöglichen;
wobei die Dichtungsbuchse (4) zum Einführen in den Buchsensitz (24) und zum Bereitstellen des Dichtungseingriffs zwischen der aufnehmenden Komponente (2) und der aufzunehmenden Komponente (3) geeignet ist;
wobei die Dichtungsbuchse (4) **dadurch gekennzeichnet ist, dass** sie aus einem zylindrischen Körper (40) besteht, der sich um eine Buchsenachse (X-X) erstreckt, wobei zumindest eine ringförmige Rippe (6) zumindest an einer inneren Seitenfläche bzw. -oberfläche (52) oder äußeren Seitenfläche bzw. - oberfläche (54) des zylindrischen Körpers (40) erhalten bzw. ausgebildet ist, wobei die zumindest eine ringförmige Rippe (6) geeignet ist, eine Fluiddichtung mit einer äußeren Fläche bzw. Oberfläche (14) der aufzunehmenden Komponente (3) oder einer inneren Fläche bzw. Oberfläche (25) des Buchsensitzes (24) zu erzeugen, wobei das ringförmige Erstreckungsprofil der zumindest einen ringförmigen Rippe (6) zumindest eine axiale Komponente parallel zu der Buchsenachse (X-X) aufweist, so dass die Kompression der zumindest einen ringförmigen Rippe (6) beim Einführen der aufzunehmenden Komponente (3) in die Dichtungsbuchse (4), die in der aufnehmenden Komponente (2) untergebracht ist, allmählich erfolgt.

2. Dichtungsbuchse (4) nach Anspruch 1, wobei das ringförmige Erstreckungsprofil der zumindest einen ringförmigen Rippe (6) so geformt ist, dass die Kompression der zumindest einen ringförmigen Rippe (6) beim Einführen der aufzunehmenden Komponente (3) in die Dichtungsbuchse (4), die in der aufnehmenden Komponente (2) untergebracht ist, linear als eine Funktion bzw. in Abhängigkeit des Eindringens der aufzunehmenden Komponente (3) in die Dichtungsbuchse (4) zunimmt.

3. Dichtungsbuchse (4) nach Anspruch 1 oder 2, wobei das ringförmige Erstreckungsprofil der zumindest einen ringförmigen Rippe (6) zwei halbringförmige Bögen (16) bildet, wobei sich jeder halbringförmige Bogen (16) zwischen zwei Bogenenden (17) erstreckt, die einander diametral gegenüberliegen bzw. entgegengesetzt sind und im Wesentlichen tangential zu einem Ende des Buchsenkörpers (40) sind, wodurch eine Bogenkurve (15) im Wesentlichen tangential zu dem anderen Ende des Buchsenkörpers (40) gebildet ist.

4. Dichtungsbuchse (4) nach einem der vorhergehenden Ansprüche, wobei eine innere ringförmige Rippe (62), die zum Erzeugen einer Fluiddichtung mit einer äußeren Fläche bzw. Oberfläche (14) der aufzunehmenden Komponente (3) geeignet ist, nur auf der inneren Seitenfläche (52) erhalten bzw. ausgebildet ist.

5. Dichtungsbuchse (4) nach einem der Ansprüche 1 bis 3, wobei eine innere ringförmige Rippe (62), die zum Erzeugen einer Fluiddichtung mit einer äußeren Fläche bzw. Oberfläche (14) der aufzunehmenden Komponente (3) geeignet ist, auf der inneren Seitenfläche (52) erhalten bzw. ausgebildet ist, und eine äußere ringförmige Rippe (64), die zum Erzeugen einer Fluiddichtung mit der inneren Fläche (25) des Buchsensitzes (24) geeignet ist, auf der äußeren Seitenfläche (54) erhalten bzw. ausgebildet ist.

6. Dichtungsbuchse (4) nach Anspruch 5, wobei die äußere ringförmige Rippe (64) demselben ringförmigen Erstreckungsprofil folgt wie die innere ringförmige Rippe (62).

7. Dichtungsbuchse (4) nach Anspruch 5 oder 6, wobei die äußere ringförmige Rippe (64) mit der inneren ringförmigen Rippe (62) übereinstimmt, so dass die äußere ringförmige Rippe (64) und die innere ringförmige Rippe (62) zusammen ein ringförmiges Dichtungselement (8) bilden, das sowohl innen als auch außen von einer Seitenwand (41) des zylindrischen Körpers (40) vorsteht.

8. Dichtungsbuchse (4) nach einem der vorhergehenden Ansprüche, wobei die zumindest eine ringförmige Rippe (6) einen im Wesentlichen kreisförmigen Abschnitt bzw. Querschnitt aufweist.

9. Dichtungsbuchse (4) nach einem der Ansprüche 1 bis 7, wobei die zumindest eine ringförmige Rippe (6) einen lippenförmigen Abschnitt bzw. Querschnitt aufweist.

10. Dichtungsbuchse (4) nach einem der vorhergehenden Ansprüche, hergestellt aus Polymermaterial, wie Gummi, und einstückig durch Formen.

11. Verbinder (1) zum Verteilen eines Fluids, umfassend eine weibliche bzw. aufnehmende Komponente (2), eine hohle männliche bzw. aufzunehmende Komponente (3), die in einer Eingriffskonfiguration in die aufnehmende Komponente (2) eingreift, um einen Durchgang des Fluids zu ermöglichen, und eine Dichtungsbuchse (4) nach einem der vorhergehenden Ansprüche, die geeignet ist, dichtend in einem Buchsensitz (24) untergebracht zu sein, der in einem Endabschnitt der aufnehmenden Komponente (2) erhalten bzw. ausgebildet ist.

12. Verbinder (1) nach Anspruch 11, wobei in einer Vormontagekonfiguration die Dichtungsbuchse (4) durch Form- und/oder Kraftkopplung in den Buchsensitz (24) eingeführt wird bzw. ist.

13. Verbinder (1) nach Anspruch 11 oder 12, wobei der Buchsensitz (24) in Bezug auf die Buchsenachse (X-X) achsensymmetrisch ist.

14. Verbinder (1) nach einem der Ansprüche 11 bis 13, wobei die Buchsenaufnahme (24) an einem Ende durch eine innere Schulter (50) begrenzt ist, die die Dichtungsbuchse (4) in der Einführrichtung der aufzunehmenden Komponente (3) in die aufnehmende Komponente (2) axial begrenzt.

## Revendications

1. Douille d'étanchéité (4) pour connecteur (1) permettant la distribution d'un fluide, dans laquelle le connecteur (1) comprend :
- un organe femelle (2) dans lequel un siège de douille (24) est obtenu ;
- un organe mâle (3) creux qui, dans une configuration d'engagement, entre en prise avec l'organe femelle (2) pour permettre au fluide de passer ;
dans laquelle la douille d'étanchéité (4) est appropriée pour être insérée dans le siège de douille (24) et pour fournir un engagement étanche entre ledit organe femelle (2) et ledit organe mâle (3) ;
dans laquelle la douille d'étanchéité (4) est **caractérisée en ce qu'**elle est constituée d'un corps cylindrique (40) qui s'étend autour d'un axe de douille (X-X), dans laquelle au moins une nervure annulaire (6) est obtenue au moins sur une surface latérale intérieure (52) ou une surface latérale extérieure (54) dudit corps cylindrique (40), la nervure annulaire (6), au moins au nombre de une, étant appropriée pour créer un joint d'étanchéité aux fluides avec une surface extérieure (14) de l'organe mâle (3) ou une surface intérieure (25) du siège de douille (24), dans laquelle le profil d'extension annulaire de la nervure annulaire (6), au moins au nombre de une, a au moins une composante axiale parallèle à l'axe de douille (X-X), de telle sorte que la compression de la nervure annulaire (6), au moins au nombre de une, lors de l'insertion de l'organe mâle (3) dans la douille d'étanchéité (4) logée dans l'organe femelle (2) se produit progressivement.

2. Douille d'étanchéité (4) selon la revendication 1, dans laquelle le profil d'extension annulaire de la nervure annulaire (6), au moins au nombre de une, est façonné de telle sorte que la compression de la nervure annulaire (6), au moins au nombre de une, lors de l'insertion de l'organe mâle (3) dans la douille d'étanchéité (4) logée dans l'organe femelle (2) augmente de manière linéaire en fonction de la pénétration de l'organe mâle (3) dans la douille d'étanchéité (4).

3. Douille d'étanchéité (4) selon la revendication 1 ou 2, dans laquelle le profil d'extension annulaire de la nervure annulaire (6), au moins au nombre de une, forme deux arcs semi-annulaires (16), chaque arc semi-annulaire (16) s'étendant entre deux extrémités d'arc (17) diamétralement opposées l'une à l'autre et sensiblement tangentes à une extrémité du corps de douille (40) formant une courbe d'arc (15) sensiblement tangente à l'autre extrémité du corps de douille (40).

4. Douille d'étanchéité (4) selon l'une quelconque des revendications précédentes, dans laquelle une nervure annulaire intérieure (62) appropriée pour créer un joint d'étanchéité aux fluides avec une surface extérieure (14) de l'organe mâle (3) est obtenue seulement sur la surface latérale intérieure (52).

5. Douille d'étanchéité (4) selon l'une quelconque des revendications 1 à 3, dans laquelle une nervure annulaire intérieure (62) appropriée pour créer un joint d'étanchéité aux fluides avec une surface extérieure (14) de l'organe mâle (3) est obtenue sur la surface latérale intérieure (52), et une nervure annulaire extérieure (64) appropriée pour créer un joint d'étanchéité aux fluides avec la surface intérieure (25) du siège de douille (24) est obtenue sur la surface latérale extérieure (54).

6. Douille d'étanchéité (4) selon la revendication 5, dans laquelle la nervure annulaire extérieure (64) suit le même profil d'extension annulaire que la nervure annulaire intérieure (62).

7. Douille d'étanchéité (4) selon la revendication 5 ou 6, dans laquelle la nervure annulaire extérieure (64) correspond à la nervure annulaire intérieure (62), de telle sorte que la nervure annulaire extérieure (64) et la nervure annulaire intérieure (62) forment ensemble un élément d'étanchéité annulaire (8) faisant saillie, à la fois à l'intérieur et à l'extérieur, à partir d'une paroi latérale (41) du corps cylindrique (40).

8. Douille d'étanchéité (4) selon l'une quelconque des revendications précédentes, dans laquelle la nervure annulaire (6), au moins au nombre de une, a une section sensiblement circulaire.

9. Douille d'étanchéité (4) selon l'une quelconque des revendications 1 à 7, dans laquelle la nervure annulaire (6), au moins au nombre de une, a une section en forme de lèvre.

10. Douille d'étanchéité (4) selon l'une quelconque des revendications précédentes, faite d'un matériau polymère, par exemple du caoutchouc, et d'une seule pièce, par moulage.

11. Connecteur (1) permettant la distribution d'un fluide, comprenant un organe femelle (2), un organe mâle (3) creux qui, dans une configuration d'engagement, entre en prise avec l'organe femelle (2) pour permettre au fluide de passer, et une douille d'étanchéité (4) selon l'une quelconque des revendications précédentes appropriée pour être logée de manière étanche dans un siège de douille (24) obtenu dans une partie d'extrémité de l'organe femelle (2).

12. Connecteur (1) selon la revendication 11, dans lequel, dans une configuration de pré-assemblage, la douille d'étanchéité (4) est insérée par un accouplement de formes et/ou à force dans le siège de douille (24).

13. Connecteur (1) selon la revendication 11 ou 12, dans lequel le siège de douille (24) est axisymétrique par rapport à l'axe de douille (X-X).

14. Connecteur (1) selon l'une quelconque des revendications 11 à 13, dans lequel le siège de douille (24) est délimité à une extrémité par un épaulement intérieur (50) qui contraint axialement la douille d'étanchéité (4) dans la direction d'insertion de l'organe mâle (3) dans l'organe femelle (2).
